# FASCICULE DE BREVET EUROPEEN

(11) **EP 3 674 626 B1**
(45) Date de publication et mention de la délivrance du brevet: **07.04.2021**
(21) Numéro de dépôt: 19219632.7
(22) Date de dépôt: 24.12.2019
(51) Int. Cl.: F25B 9/14, F02G 1/043

(54) **DISPOSITIF DE REFROIDISSEMENT À CYCLE STIRLING AVEC SUPPORT MONOBLOC**
KÜHLVORRICHTUNG MIT STIRLINGZYKLUS UND MONOBLOCKHALTERUNG
STIRLING CYCLE COOLING DEVICE WITH INTEGRAL MOUNTING

(30) Priorité: 28.12.2018 FR 1874268
(43) Date de publication de la demande: 01.07.2020
(73) Titulaire: Thales, 92400 Courbevoie (FR)
(72) Inventeur: LE BORDAYS, Julien, 31700 BLAGNAC (FR); MARTIN, Jean-Yves, 31700 BLAGNAC (FR); SACAU, Mikel, 31700 BLAGNAC (FR)
(74) Mandataire: Marks & Clerk France

(56) Documents cités:
- EP-A1- 0 778 452
- JP-A- H08 313 093
- JP-A- H09 170 491

## Description

L'invention concerne un dispositif de refroidissement mettant en œuvre un cycle thermodynamique de type Stirling inversé. Un tel dispositif est par exemple décrit dans le brevet US4365982. Le refroidissement est réalisé au moyen d'un fluide frigorigène circulant dans un circuit comprenant principalement un compresseur et un régénérateur utilisé comme échangeur thermique. Le document EP 0 778 452 A1 divulgue un dispositif de refroidissement à cycle Stirling selon le préambule de la revendication 1.

L'invention trouve une utilité particulière dans le domaine des capteurs et des composants électroniques nécessitant un refroidissement à basse température. La température obtenue par un tel dispositif de refroidissement se situe généralement dans une gamme de températures comprise entre 40 et 250K.

Le compresseur comprend un piston de compression mobile en translation dans un cylindre. Le régénérateur comprend un piston de régénération également mobile dans un second cylindre. Les deux pistons sont entrainés chacun par un système bielle/manivelle, composé d'un vilebrequin (qui peut porter un ou plusieurs manetons) et d'une ou plusieurs bielles. Le vilebrequin est entrainé en rotation par un moteur rotatif. Les axes de déplacement des deux pistons sont définis respectivement dans deux plans généralement parallèles, distincts ou confondus. Ces plans sont généralement perpendiculaires à l'axe de rotation du vilebrequin.

De manière classique, le piston de régénération est entraîné par le vilebrequin, par l'intermédiaire d'une bielle articulée d'une part sur le maneton et d'autre part sur le piston de régénération.

De manière connue, le cycle de Stirling inversé comprend les quatre phases suivantes:
- une compression isotherme d'un fluide à une température chaude, obtenue par le déplacement d'un piston de compression dans un cylindre de compression ;
- un refroidissement isochore du fluide, de la température chaude à une température froide, obtenu par passage du fluide à travers un piston de régénération, ledit piston étant en déplacement dans un cylindre de régénération et jouant le rôle d'échangeur thermique ;
- une détente isotherme du fluide à la température froide, obtenue par retour du piston de compression dans le cylindre de compression, et
- un réchauffement isochore du fluide, de la température froide à la température chaude, obtenu par retour du piston de régénération dans le cylindre de régénération.

Le mécanisme à trois axes de mouvement, deux axes de translation pour les pistons et un axe de rotation pour le vilebrequin est généralement hyperstatique. L'hyperstatisme est le résultat de compromis nécessaires pour arriver à conjuguer les contraintes de fabrication et de positionnement des différents composants de la chaine cinématique du mécanisme et les contraintes de discrétion acoustiques et vibratoires imposées par les applications visées (notamment l'optronique).

De plus, certaines liaisons cinématiques nécessitent généralement l'utilisation de lubrifiant, notamment entre les pistons et leur cylindre ou dans le système bielle/manivelle. Cependant, ces lubrifiants peuvent contaminer le fluide frigorigène. Dans un dispositif de refroidissement, une telle contamination peut conduire à des blocages si un des contaminants atteint sa température de solidification. En effet, dans les applications cryogéniques visées, les besoins de refroidissement nécessitent souvent d'atteindre des températures froides bien en deçà des températures de changement d'état des lubrifiants et contaminants.

Au niveau de la liaison entre un piston et son cylindre, il est possible de se passer de lubrifiants en réduisant le jeu fonctionnel radial entre le piston et le cylindre. Cette réduction du jeu limite les possibilités d'auto alignement des embiellages. Si l'on souhaite limiter le degré d'hyperstatisme au niveau des liaisons entre le vilebrequin et les bielles il est nécessaire de prévoir des jeux fonctionnels au niveau du ou des manetons. Cependant du fait des efforts alternatifs exercés sur les pistons, de tels jeux se rattrapent deux fois par tour et génèrent des chocs. Ces chocs induisent des vibrations et des bruits acoustiques indésirables au niveau du refroidisseur et des systèmes dans lesquels des refroidisseurs sont installés.

La recherche d'isostatisme parait donc contradictoire avec celle de la limitation des vibrations. Deux types de solutions sont envisagés pour améliorer le respect de ces deux exigences, d'une part la réalisation de pièces mécaniques avec des tolérances très serrées et d'autre part la mise en œuvre de liaisons comprenant des systèmes intégrés de rattrapage de jeu. Ces deux solutions ne sont pas parfaites et entrainent une augmentation des coûts de réalisation, de la masse du mécanisme et des pertes par frottements pour les liaisons à rattrapage de jeu.

Par ailleurs, dans les solutions actuelles, pour réaliser un mécanisme à trois axes de mouvement tel que décrit plus haut, il est nécessaire d'assembler un grand nombre de pièces mécaniques. Ces nombreux assemblages complexifient les chaînes de cotes et nécessitent de spécifier, pour chaque pièce entrant dans la chaîne de cotes, des tolérances de fabrication encore plus serrées. Pour limiter les tolérances trop serrées, il est possible d'appairer les différents pièces ou de réaliser le montage sur des gabarits. Cela complique les procédures de montage.

L'invention vise à pallier tout ou partie des problèmes cités plus haut en proposant un dispositif tendant vers un mécanisme isostatique silencieux et peu vibrant.

A cet effet, l'invention a pour objet un dispositif de refroidissement à cycle Stirling comprenant un compresseur à piston alternatif entrainé par un moteur rotatif autour d'un axe par l'intermédiaire d'un vilebrequin. Le dispositif comprend en outre un support monobloc formant un cylindre dans lequel se déplace le piston du compresseur. Le vilebrequin est supporté par un seul palier qui est disposé sans pièce intermédiaire dans un logement du support monobloc.

Avantageusement, le moteur rotatif comprend un stator directement fixé au support monobloc.

Le dispositif comprend avantageusement en outre un régénérateur à piston alternatif entrainé par le moteur rotatif par l'intermédiaire du vilebrequin. Le support monobloc forme alors un cylindre dans lequel se déplace le piston du régénérateur.

Le piston du compresseur et/ou le piston du régénérateur coulissent avantageusement dans le support monobloc sans pièce mécanique intermédiaire et notamment sans présence d'une chemise entre le support et le piston correspondant.

Le palier est avantageusement disposé entre un maneton du vilebrequin et le moteur rotatif et supporte un rotor du moteur rotatif.

Le palier peut comprendre au moins une bague extérieure avantageusement réalisée directement dans le support monobloc.

Le palier peut comprendre deux roulements. Les bagues extérieures des roulements sont avantageusement réalisées dans le support monobloc.

Avantageusement le moteur rotatif comprend un stator interne et un rotor externe.

Le stator interne possède avantageusement une forme cylindrique ouverte axialement selon l'axe. Le support monobloc comprend une portée tubulaire s'étendant suivant l'axe. Le stator est fixé sur l'extérieur de la portée tubulaire. L'intérieur de la portée tubulaire forme le logement.

L'invention sera mieux comprise et d'autres avantages apparaîtront à la lecture de la description détaillée d'un mode de réalisation donné à titre d'exemple, description illustrée par le dessin joint dans lequel :
- la figure 1 représente une vue en coupe d'une première variante d'un premier mode de réalisation d'un dispositif de refroidissement selon l'invention ;
- la figure 2 représente une autre vue de la première variante ;
- la figure 3 représente une vue en coupe d'une deuxième variante du premier mode de réalisation ;
- la figure 4 représente une vue en coupe d'une troisième variante du premier mode de réalisation ;
- la figure 5 représente un second mode de réalisation d'un dispositif de refroidissement selon l'invention.

Par souci de clarté, les mêmes éléments porteront les mêmes repères dans les différentes figures.

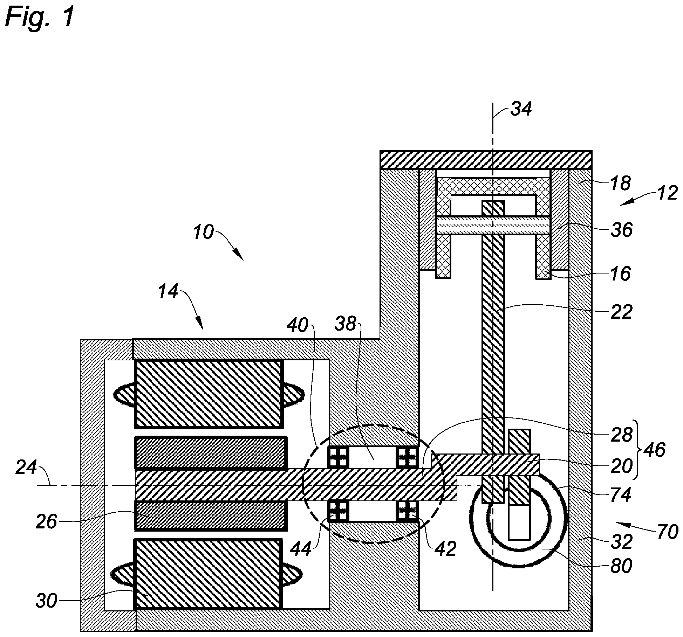

La figure 1 représente en coupe un dispositif de refroidissement 10 mettant en œuvre un cycle thermodynamique de type Stirling inversé. Le dispositif comprend un compresseur 12 entrainé par un moteur rotatif 14. Le compresseur 12 comprend principalement un piston alternatif 16 se déplaçant en translation dans un mouvement de va-et-vient dans un cylindre 18. Le piston 16 est entrainé par un maneton 20 à l'aide d'une bielle 22. Le maneton 20 est entrainé en rotation par le moteur 14 autour d'un axe 24. Le moteur 14 comprend un rotor 26 entrainant un arbre moteur 28 solidaire du maneton 20. L'ensemble formé par l'arbre moteur 28 et le maneton 20 est désigné ici vilebrequin 46. Le rotor 26 est disposé à l'intérieur d'un stator 30.

Selon l'invention le dispositif de refroidissement 10 comprend un support monobloc 32. Autrement dit, le support 32 est réalisé en une seule pièce mécanique. Le support 32 comprend un alésage s'étendant selon un axe 34 perpendiculaire à l'axe 24. L'alésage forme le cylindre 18 dans lequel se déplace le piston 16. Une chemise 36 portée par le support 32 est interposée entre le support 32 et le piston 16.

Le support 32 comprend en outre un logement 38 dans lequel se situe un palier 40 supportant le vilebrequin 46. Le palier 40 est disposé dans le logement 38 sans pièce intermédiaire entre le palier 40 et le logement 38. Le support monobloc 32 est avantageusement réalisé sans assemblage. Dans le procédé de fabrication du support 32, un assemblage peut être accepté à condition que l'alésage formant le cylindre 18 ainsi que le logement 38 recevant le palier 40 soient usinés après l'assemblage. Cet usinage réalisé après assemblage permet d'éviter que les tolérances de l'assemblage ne viennent se cumuler avec celle reliant le cylindre 18 et le logement 38. En d'autres termes on entend par monobloc une pièce mécanique dont les tolérances de fabrication ne sont pas impactées par un quelconque assemblage pouvant intervenir durant son procédé de fabrication. De la même façon le fait de disposer le palier 40 dans le support 32 sans pièce intermédiaire permet de limiter les chaînes cotes entre le cylindre 18 et le vilebrequin 46. Aucune pièce mécanique intermédiaire dont les cotes allongeraient la chaîne de cote n'est située entre le logement 38 et le palier 40.

L'axe 24 est défini comme l'axe de rotation du palier 40. Un seul palier 40 porte la partie tournante du dispositif de refroidissement 10 formée par le rotor 26 et le vilebrequin 46. Ce palier 40 unique permet de faciliter la réalisation du support 32. En effet, il serait possible de supporter la partie tournante au moyen de deux paliers par exemple situés de part et d'autre du vilebrequin. Cependant cette disposition impose des tolérances de fabrication serrées pour aligner les deux paliers selon l'axe 24. Un seul palier permet de d'éviter cette contrainte d'alignement.

Le logement 38 présente globalement une forme d'alésage s'étendant selon l'axe 24. Afin de limiter le porte-à-faux de l'arbre moteur, le logement 38 est situé entre le moteur 14 et le maneton 20. Alternativement, il est également possible de disposer le logement 38 et donc le palier 40 de l'autre côté du moteur 14 ou de l'autre côté du maneton 20. Cependant la position du palier 40 entre le moteur 14 et le maneton 20 permet de mieux répartir les charges supportées par le palier 40, exercées notamment par le compresseur 12 et par le moteur 14.

Le palier 40 est par exemple formé de deux roulements 42 et 44 dont les bagues extérieures sont solidaires du logement 38 et dont les bagues intérieures portent l'arbre moteur 28. Les roulements 42 et 44 peuvent être jumelés sous forme par exemple d'un roulement à double rangée d'éléments roulants avec une bague extérieure commune et deux bagues intérieures distinctes afin de limiter au maximum les jeux dans le palier 40. Alternativement, il est possible de remplacer les roulements par un palier lisse. Les bagues extérieures des roulements 42 et 44 ou la bague extérieure du palier lisse peut être fixée au support 32 au moyen d'un ajustement serré et/ou de colle disposée entre la ou les bagues extérieures et le support 32. Cette colle ne constitue pas une pièce mécanique intermédiaire entre le support 32 et le palier 40. Pour limiter la chaîne de cotes entre le cylindre 18 et le vilebrequin 46, la bague extérieure du palier lisse peut être directement réalisée dans le support monobloc 32.

Le fait de réaliser dans une même pièce mécanique, en l'occurrence le support 32, le cylindre du compresseur 12 et le logement 38 du palier unique 40 limite les chaînes de cotes complexes ou les procédures de montage avec des outillages de positionnement qui existeraient si le logement et le cylindre étaient réalisés dans deux pièces mécaniques distinctes.

Il est également possible de fixer le stator 30 du moteur 14 directement sur le support 32. Cela permet de simplifier la chaîne de cotes permettant de définir le jeu fonctionnel entre le stator 30 et le rotor 26. Cette chaîne de cotes ne passe que par le stator 30, le support 32, le palier 40, l'arbre moteur 28 et le rotor 26. Aucune autre pièce mécanique appartenant à la classe d'équivalence du support 32 n'apparait dans cette chaîne de cotes.

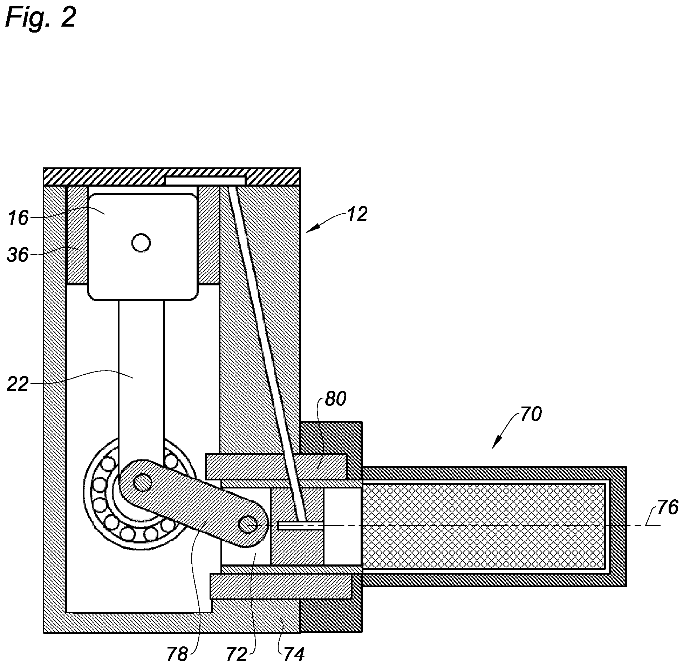

La figure 2 représente le dispositif de refroidissement 10 en coupe dans un plan perpendiculaire au plan de coupe de la figure 1, c'est-à-dire perpendiculaire à l'axe 24. Le dispositif de refroidissement 10 comprend en outre un régénérateur 70 également entrainé en rotation par le moteur 14 et plus précisément par le vilebrequin 46. Dans la littérature, le régénérateur est parfois appelé déplaceur. Le régénérateur 70 comprend principalement un piston alternatif 72 se déplaçant en translation dans un mouvement de va-et-vient dans un cylindre 74 le long d'un axe 76. Dans l'exemple représenté, l'axe 76 du régénérateur 70 est perpendiculaire à l'axe 34 selon lequel le piston 16 du compresseur 12 se déplace. Il est également possible de réaliser un dispositif de refroidissement selon l'invention avec d'autres orientations relatives des axes 76 et 34. Le piston 72 est entrainé par le maneton 20 à l'aide d'une bielle 78. Alternativement, le vilebrequin 46 peut comprendre un second maneton, distinct du maneton 20 et entrainant la bielle 78. Le cylindre 74 est avantageusement réalisé dans le support monobloc 32. Autrement dit, le support 32 comprend un alésage formant le cylindre 74. Comme pour le compresseur 12, l'alésage du régénérateur 70 est chemisé. Autrement dit, une chemise 80, portée par le support 32, est interposée entre le support 32 et le piston 72.

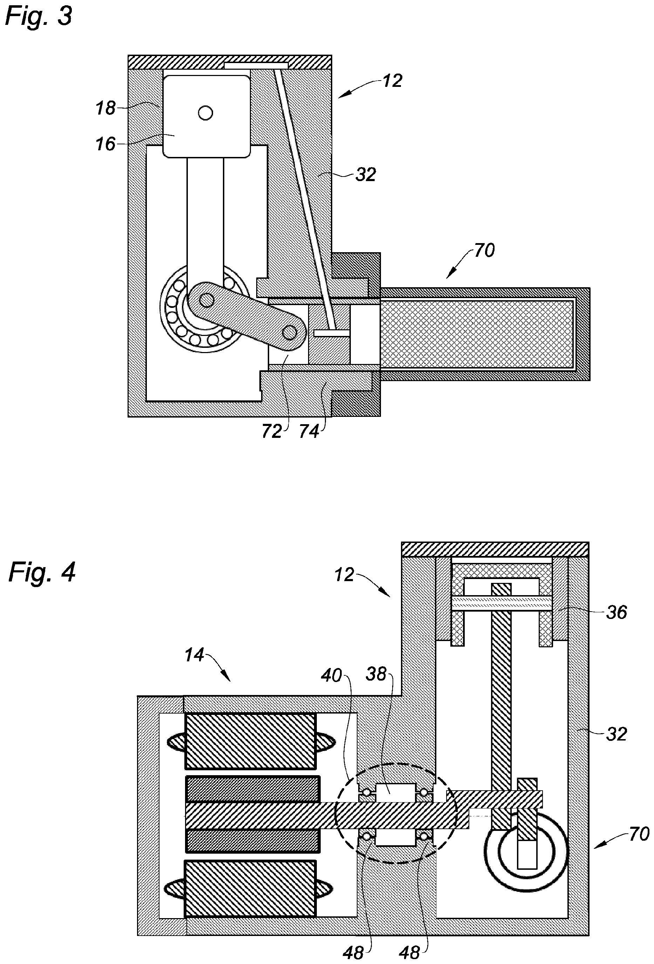

La figure 3 représente une variante du dispositif de refroidissement 10 en coupe dans un plan semblable à celui de la figure 2. On y retrouve le compresseur 12 et le régénérateur 70. Dans le support 32 on retrouve l'alésage formant le cylindre 18 du compresseur 12 et l'alésage formant le cylindre 74 du régénérateur 70. A la différence des figures 1 et 2, les cylindres 18 et 74 du support 32 ne sont pas chemisés et les pistons 16 et 72 coulissent dans le support 32 sans pièce mécanique intermédiaire. Plus précisément, le seul intermédiaire entre un piston et son cylindre peut être un fluide, un lubrifiant fluide ou solide. Il est possible de conserver une chemise pour l'un des pistons seulement, soit pour le piston 16 soit pour le piston 72. L'invention est déjà avantageuse en supprimant au moins l'une des deux chemises 36 ou 80.

La figure 4 représente une autre variante du dispositif de refroidissement 10 représenté sur la figure 1. On y retrouve compresseur 12, le régénérateur 70 et le moteur 14. Dans le support 32 on retrouve les alésages formant les cylindres 18 et 74 ainsi que le logement 38 dans lequel le palier 40 est disposé. A la différence de la figure 1, les bagues extérieures 48 des roulements 42 et 44 sont directement réalisées dans le support 32. Le logement 38 est plus compliqué à réaliser mais dans cette variante, il n'y plus d'ajustement à prévoir entre les bagues extérieures des roulements et le support 32.

Sur la figure 4 la chemise 36 apparait. Il est bien entendu possible de se passer de cette chemise comme représenté sur la figure 3. Il en est de même pour la chemise 80 dont on peut se passer dans la variante de la figure 4.

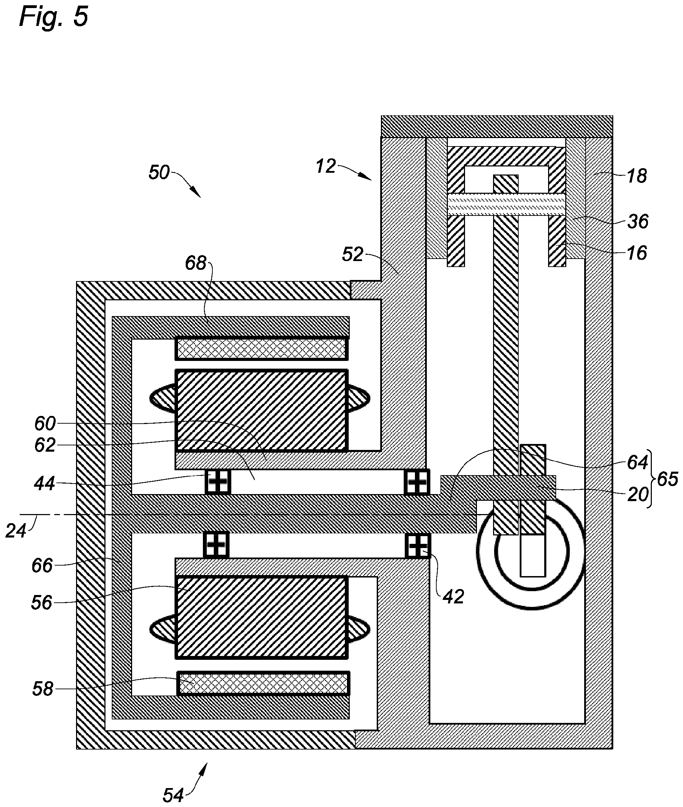

La figure 5 représente un second dispositif de refroidissement 50 mettant en œuvre un cycle thermodynamique de type Stirling inversé. On y retrouve le compresseur 12 dont le piston 16 est entrainé par le vilebrequin 20. Sur la figure 5, la chemise 36 sert d'intermédiaire entre l'alésage du support 52 et le piston 16. Il est bien entendu possible de se passer de la chemise 36 comme décrit à l'aide des figures 2 et 4.

Dans le dispositif de refroidissement 50, un vilebrequin 65 est entrainé par un moteur électrique 54 à rotor externe. Dans un dispositif de refroidissement à cycle de type Stirling inversé, le déplacement alternatif des pistons dans leur cylindre respectif génère des efforts axiaux alternatifs et potentiellement déphasés. Ces efforts, exercés par les pistons, sont transmis au maneton 20 par les embiellages présents dans le dispositif de refroidissement 50. La combinaison de ces chargements se traduit par un couple résistant d'amplitude variable au niveau de l'arbre moteur 64. Plus précisément, ce couple présente de fortes variations d'amplitude entre une valeur proche de zéro et une valeur maximale atteinte deux fois par tour. Il est possible de limiter l'impact de ces variations de couple résistant au niveau de la motorisation à l'aide d'un volant d'inertie ajouté sur l'arbre moteur. Cependant, l'ajout de ce type de pièce mobile entraine une augmentation du volume, de la masse et du coût du dispositif de refroidissement 50. Un moteur à rotor externe dispose par construction d'un moment d'inertie autour de son axe de rotation plus important qu'un moteur à rotor interne tel que décrit sur les figures 1 à 4. La mise en œuvre d'un moteur à rotor externe permet par conséquent de combiner les fonctions portées par le rotor et le volant d'inertie au sein d'un même composant. Par ailleurs, pour un volume et un rendement donnés, un moteur à rotor externe peut générer un couple supérieur à celui d'un moteur à rotor interne. De même, pour un couple donné, l'utilisation d'un moteur à rotor externe permet donc de faciliter la miniaturisation du dispositif de refroidissement.

Le stator 56 du moteur 54 possède une forme cylindrique ouverte selon l'axe de rotation 24 du moteur. Le stator 56 comprend par exemple des enroulements permettant de générer un champ magnétique tournant s'étendant radialement par rapport à l'axe 24 en périphérie du stator 56.

Le moteur 54 comprend un rotor 58 réalisé sous forme d'un segment tubulaire d'axe de révolution 24. Le rotor 58 est disposé radialement autour du stator 56. Le rotor 58 peut comprendre des enroulements ou des aimants permanents destinés à s'accrocher au champ magnétique généré par les enroulements statoriques. L'utilisation d'aimants permanents permet d'éviter la mise en œuvre de contacts tournants, tels que des balais ou des charbons, nécessaires pour alimenter les enroulements rotoriques.

Le support 52 est monobloc comme le support 32 et comprend une portée tubulaire 60 s'étendant selon l'axe 24. Le stator 56 est fixé sur l'extérieur de la portée tubulaire 60 qui traverse le stator 56. L'intérieur de cette portée tubulaire 60 forme un logement 62 dans lequel se situe le palier 40 supportant l'arbre moteur 64. Comme précédemment, seul le palier 40 porte la partie tournante du dispositif de refroidissement 50 formée par le rotor 58 et le vilebrequin 65 formé ici par l'arbre moteur 64 et le ou les manetons 20. Sur la figure 5, le palier 40 est formé des deux roulements 42 et 44. Comme précédemment, les bagues extérieures des roulements 42 et 44 peuvent être réalisées directement dans le support 52 et plus précisément à l'intérieur de la portée 60. Par ailleurs, les roulements 42 et 44 peuvent être remplacés par d'autres composants mécaniques tels que des paliers lisses. De même que dans le dispositif 10, les deux roulements 42 et 44 du dispositif 50 peuvent être par exemple combinés en un roulement à double rangées d'éléments roulants avec une bague extérieure commune et deux bagues intérieures distinctes.

Le mode de réalisation de la figure 5 permet d'écarter les roulements 42 et 44 selon l'axe 24, assurant une meilleure stabilité mécanique aux parties tournantes du dispositif de refroidissement 50. Les roulements 42 et 44 peuvent être à billes ou à rouleaux. Les contacts des roulements peuvent être droits ou obliques.

L'arbre moteur 64 est solidaire d'un voile 66 disposé perpendiculairement à l'axe 24. Le voile 66 est solidaire d'un segment de tube 68 d'axe de révolution 24. Le rotor 58 est fixé à l'intérieur du segment de tube 68. Le moteur 54 est disposé entre le support 52 et le voile 66.

## Revendications

1. Dispositif de refroidissement à cycle Stirling comprenant un compresseur (12) à piston alternatif (16) entrainé par un moteur rotatif (14 ; 54) autour d'un axe (24) par l'intermédiaire d'un vilebrequin (46 ; 65), **caractérisé en ce qu'**il comprend en outre un support monobloc (32 ; 52) formant un cylindre (18) dans lequel se déplace le piston (16) du compresseur (12), **en ce que** le vilebrequin (46 ; 65) est supporté par un seul palier (40), et **en ce que** le palier (40) est disposé sans pièce intermédiaire dans un logement (38 ; 62) du support monobloc (32 ; 52).

2. Dispositif selon la revendication 1, **caractérisé en ce que** le moteur rotatif (14 ; 54) comprend un stator (30 ; 56) directement fixé au support monobloc (32 ; 52).

3. Dispositif selon l'une des revendications précédentes, **caractérisé en ce qu'**il comprend en outre un régénérateur (70) à piston alternatif (72) entrainé par le moteur rotatif (14 ; 54) par l'intermédiaire du vilebrequin (46 ; 65) et **en ce que** le support monobloc (32 ; 52) forme un cylindre dans lequel se déplace le piston (72) du régénérateur (70).

4. Dispositif selon l'une des revendications précédentes, **caractérisé en ce que** le piston (16) du compresseur (12) et/ou le piston (72) du régénérateur (70) coulissent dans le support monobloc (32 ; 52) sans pièce mécanique intermédiaire.

5. Dispositif selon l'une des revendications précédentes, **caractérisé en ce que** le palier (40) est disposé entre un maneton (20) du vilebrequin (46 ; 65) et le moteur rotatif (14 ; 54) et **en ce que** le palier (40) supporte un rotor (26 ; 58) du moteur rotatif (14 ; 54).

6. Dispositif selon l'une des revendications précédentes, **caractérisé en ce que** le palier (40) comprend au moins une bague extérieure (48) directement réalisée dans le support monobloc (32 ; 52).

7. Dispositif selon l'une des revendications précédentes, **caractérisé en ce que** le palier (40) comprend deux roulements (42, 44) et **en ce que** les bagues extérieures (48) des roulements (42, 44) sont réalisées dans le support monobloc (32 ; 52).

8. Dispositif selon l'une des revendications précédentes, **caractérisé en ce que** le moteur rotatif (14 ; 54) comprend un stator interne (56) et un rotor externe (58).

9. Dispositif selon la revendication 8, **caractérisé en ce que** le stator interne (56) possède une forme cylindrique ouverte axialement selon l'axe (24), **en ce que** le support monobloc (52) comprend une portée tubulaire (60) s'étendant suivant l'axe (24), **en ce que** le stator (56) est fixé sur l'extérieur de la portée tubulaire (60) et **en ce que** l'intérieur de la portée tubulaire (60) forme le logement (62).

## Patentansprüche

1. Kühlvorrichtung mit Stirlingzyklus, umfassend einen Kompressor (12) mit Hubkolben (16), welcher von einem Drehmotor (14; 54) durch eine Kurbelwelle (46; 65) um eine Achse (24) angetrieben wird, **dadurch gekennzeichnet, dass** er ferner eine Monoblockhalterung (32; 52) umfasst, welche einen Zylinder (18) bildet, in welchem sich der Kolben (16) des Kompressors (12) bewegt, dadurch, dass die Kurbelwelle (46; 65) durch ein einziges Lager (40) gestützt wird und dadurch, dass das Lager (40) ohne Zwischenstück in einer Aufnahme (38; 62) der Monoblockhalterung (32; 52) angeordnet ist.

2. Vorrichtung nach Anspruch 1, **dadurch gekennzeichnet, dass** der Drehmotor (14; 54) einen Stator (30; 56) umfasst, welcher direkt an der Monoblockhalterung (32; 52) befestigt ist.

3. Vorrichtung nach einem der vorhergehenden Ansprüche, **dadurch gekennzeichnet, dass** sie ferner einen Regenerator (70) mit Hubkolben (72) umfasst, welcher von dem Drehmotor (14; 54) durch die Kurbelwelle (46; 65) angetrieben wird und dadurch, dass die Monoblockhalterung (32; 52) einen Zylinder bildet, in welchem sich der Kolben (72) das Regenerators (70) bewegt.

4. Vorrichtung nach einem der vorhergehenden Ansprüche, **dadurch gekennzeichnet, dass** der Kolben (16) des Kompressors (12) und/oder der Kolben (72) des Regenerators (70) in der Monoblockhalterung (32; 52) ohne mechanisches Zwischenstück gleitet.

5. Vorrichtung nach einem der vorhergehenden Ansprüche, **dadurch gekennzeichnet, dass** das Lager (40) zwischen einem Zapfen (20) der Kurbelwelle (46; 65) und dem Drehmotor (14; 54) angeordnet ist und dadurch, dass das Lager (40) einen Rotor (26; 58) des Drehmotors (14; 54) stützt.

6. Vorrichtung nach einem der vorhergehenden Ansprüche, **dadurch gekennzeichnet, dass** das Lager (40) mindestens einen äußeren Ring (48) umfasst, welcher direkt in der Monoblockhalterung (32; 52) gebildet ist.

7. Vorrichtung nach einem der vorhergehenden Ansprüche, **dadurch gekennzeichnet, dass** das Lager (40) zwei Kugellager (42, 44) umfasst und dadurch, dass die äußeren Ringe (48) der Kugellager (42, 44) in der Monoblockhalterung (32; 52) gebildet sind.

8. Vorrichtung nach einem der vorhergehenden Ansprüche, **dadurch gekennzeichnet, dass** der Drehmotor (14; 54) einen inneren Stator (56) und einen äußeren Rotor (58) umfasst.

9. Vorrichtung nach Anspruch 8, **dadurch gekennzeichnet, dass** der innere Stator (56) eine zylindrische Form besitzt, welche axial entlang der Achse (24) geöffnet ist, dadurch, dass die Monoblockhalterung (52) eine röhrenförmige Tragfläche (60) umfasst, welche sich entlang der Achse (24) erstreckt und dadurch, dass der Stator (56) an der Außenseite der röhrenförmigen Tragfläche (60) befestigt ist und dadurch, dass die Innenseite der röhrenförmigen Tragfläche (60) die Aufnahme (62) bildet.

## Claims

1. Stirling-cycle cooling device comprising a compressor (12) with a reciprocating piston (16) driven by a rotary motor (14; 54) about an axis (24) by means of a crankshaft (46; 65), **characterized in that** it further comprises a monobloc support (32; 52) forming a cylinder (18) in which the piston (16) of the compressor (12) moves, **in that** the crankshaft (46; 65) is supported by a single bearing (40), and **in that** the bearing (40) is arranged without an intermediate component in a housing (38; 62) of the monobloc support (32; 52).

2. Device according to claim 1, **characterized in that** the rotary motor (14; 54) comprises a stator (30; 56) fixed directly to the monobloc support (32; 52).

3. Device according to one of the preceding claims, **characterized in that** it further comprises a regenerator (70) with a reciprocating piston (72) driven by the rotary motor (14; 54) by means of the crankshaft (46; 65) and **in that** the monobloc support (32; 52) forms a cylinder in which the piston (72) of the regenerator (70) moves.

4. Device according to one of the preceding claims, **characterized in that** the piston (16) of the compressor (12) and/or the piston (72) of the regenerator (70) slide in the monobloc support (32; 52) without an intermediate mechanical component.

5. Device according to one of the preceding claims, **characterized in that** the bearing (40) is positioned between a crank pin (20) of the crankshaft (46; 65) and the rotary motor (14; 54), and **in that** the bearing (40) supports a rotor (26; 58) of the rotary motor (14; 54).

6. Device according to one of the preceding claims, **characterized in that** the bearing (40) comprises at least one outer race (48) directly produced in the monobloc support (32; 52).

7. Device according to one of the preceding claims, **characterized in that** the bearing (40) comprises two rolling-bearing assemblies (42, 44) and **in that** the outer races (48) of the rolling bearing assemblies (42, 44) are produced in the monobloc support (32; 52).

8. Device according to one of the preceding claims, **characterized in that** the rotary motor (14; 54) comprises an internal stator (56) and an external rotor (58).

9. Device according to claim 8, **characterized in that** the internal stator (56) has a cylindrical shape open axially along the axis (24), **in that** the monobloc support (52) comprises a tubular bearing surface (60) extending along the axis (24), **in that** the stator (56) is fixed to the outside of the tubular bearing surface (60), and **in that** the inside of the tubular bearing surface (60) forms the housing (62).
